(19) **Europäisches Patentamt / European Patent Office / Office européen des brevets**

(11) **EP 1 612 027 B1**

(12) **EUROPEAN PATENT SPECIFICATION**

(45) Date of publication and mention
of the grant of the patent:
**11.01.2012 Bulletin 2012/02**

(51) Int Cl.:
**B29C 45/76** *(2006.01)*

(21) Application number: **04726311.6**

(22) Date of filing: **07.04.2004**

(86) International application number:
**PCT/JP2004/005002**

(87) International publication number:
**WO 2004/089599 (21.10.2004 Gazette 2004/43)**

(54) **Method of controlling injection molding machine**

Verfahren zur Steuerung einer Spritzgiessmaschine

Procédé de commande de machine de moulage par injection

(84) Designated Contracting States:
**AT CH DE IT LI**

(30) Priority: **07.04.2003 JP 2003102981**
**30.04.2003 JP 2003125640**

(43) Date of publication of application:
**04.01.2006 Bulletin 2006/01**

(73) Proprietor: **SUMITOMO HEAVY INDUSTRIES, LTD.**
**Shinagawa-ku,**
**Tokyo 141-8686 (JP)**

(72) Inventors:
- **KONNO, Takeshi**
  **2630002 (JP)**
- **AMANO, Mitsuaki**
  **2630002 (JP)**
- **SATO, Hiroshi**
  **2630002 (JP)**

(74) Representative: **Geyer, Ulrich F.**
**Wagner & Geyer Partnerschaft**
**Patent- und Rechtsanwälte**
**Gewürzmühlstrasse 5**
**80538 München (DE)**

(56) References cited:
GB-A- 2 300 140          JP-A- 04 339 631
JP-A- 07 125 024          JP-A- 08 090 619
JP-A- 09 011 290          JP-A- 2002 052 582
JP-A- 2003 300 236        US-A- 5 514 311
US-A1- 2002 192 322

- DATABASE WPI Week 199624 Thomson Scientific, London, GB; AN 1996-234628 XP002541950 & JP 08 090619 A (NOK CORP) 9 April 1996 (1996-04-09)
- DATABASE WPI Week 199703 Thomson Scientific, London, GB; AN 1997-028934 XP002541951 & JP 08 290448 A (TOYO KIKAI KINZOKU KK) 5 November 1996 (1996-11-05)
- JOHANNABER F ET AL: "Handbuch Spritzgiessen , PASSAGE" HANDBUCH SPRITZGIESSEN, XX, XX, 13 November 2001 (2001-11-13), pages 303,326-332, XP002288759
- DATABASE WPI Week 199511 Thomson Scientific, London, GB; AN 1995-077625 XP002541952 & JP 07 001522 A (SUMITOMO HEAVY IND LTD) 6 January 1995 (1995-01-06)

EP 1 612 027 B1

**Description**

TECHNICAL FIELD

The present invention relates to control methods of an injection molding machine and, more particularly, to a controlling method of an injection molding machine that injects a melted resin into a mold by a movement of a screw.

BACKGROUND ART

A description will be given of a molding cycle in an injection molding machine.

(1) In a plasticization/measurement process, a screw is rotated by a servomotor for screw rotation. The screw is arranged in the heating cylinder. A resin is supplied to the rear part of the screw in the heating cylinder from a hopper. The resin supplied to the rear part of the screw is transferred into an end portion of the heating cylinder by a constant amount while being heated and melted. At this time, the screw moves rearward while receiving a pressure (back pressure) of the melted resin, which is being stored in the end portion of the heating cylinder.

An injection shaft is directly connected to the rear end portion of the screw. The injection shaft is rotatably supported by a pressure plate via a bearing. The injection shaft is driven in an axial direction by a servomotor for injection, which moves the pressure plate. The pressure plate moves forward and rearward along a guide bar by the servomotor for injection through a ball screw. The above-mentioned back pressure of the melted resin is detected by a load cell as mentioned later, and is controlled by a feedback control loop.

(2) Subsequently, in a filling process, the pressure plate is moved forward by the drive of the servomotor for injection so as to fill the melted resin into a mold by using an end portion of the screw as a piston. At this time, the resin pressure in front of the screw is detected as an injection pressure.
(3) At a time of the end of the filling process, the melted resin is filled in a cavity of the mold. The forward movement of the screw at that time is switched is switched from a velocity control to a pressure control. Such switching is referred to as V (velocity)/P (pressure) switching, which gives influences to quality of a molded component.
(4) After the V/P switching, the resin in the cavity of the mold is gradually cooled under the set pressure. This stage is referred to as pressure-holding process. In the pressure-holding process, the injection pressure is controlled according to the feedback control loop similar to the back pressure control.

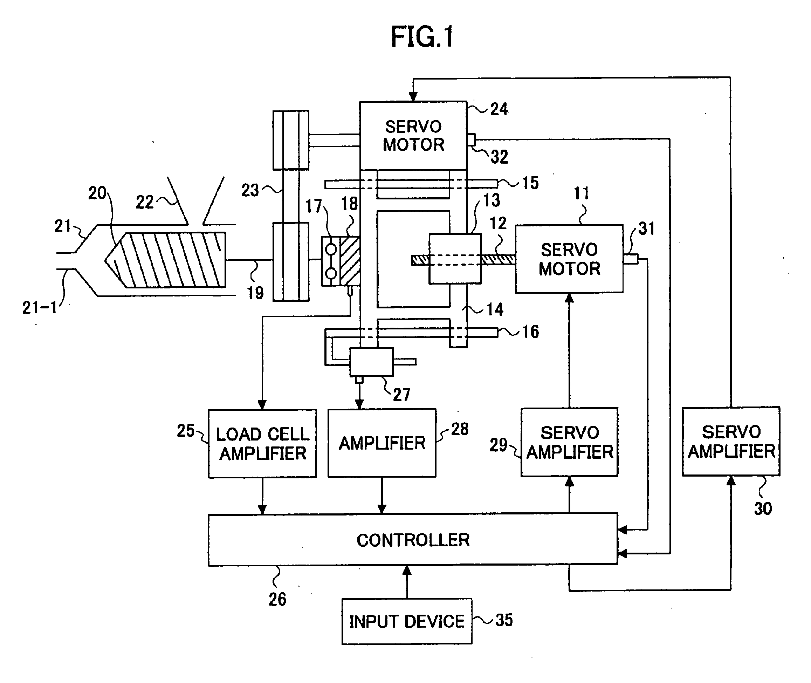

In the injection apparatus, after the pressure-holding process of (4), it returns to the plasticization/measurement process of (1), and goes into a subsequent molding cycle. On the other hand, in a clamping apparatus, after an eject operation is performed to eject a cooled and solidified product from the mold.
In the eject operation, after the mold is opened and the cooled and solidified product is ejected, the mold is closed and does into the filling process of (2).
Next, a description will be given, with reference to FIG. 1, of a part of the injection apparatus side, especially, in the electric type injection molding machine having the injection apparatus according to a servomotor drive. In FIG. 1, a rotation of the servomotor 11 for injection is transmitted to a ball screw 12. A nut 13 which is moved forward by a rotation of the ball screw 12 is fixed to the pressure plate 14. The pressure plate 14 is movable along guide bars 15 and 16 fixed to a base frame (not shown). The forward and rearward movement of the pressure plate 14 is transmitted to the screw 20 through the bearing 17, the load cell 18 and the injection shaft 19. The screw 20 is rotatably and movably arranged in the heating cylinder 21 in an axial direction. A hopper 22 for supplying resin is provided to the heating cylinder 21 corresponding to a rear portion of the screw 20. A rotational movement of the servomotor 24 for screw rotation is transmitted to the injection shaft 19 through a coupling member 23 such as a belt and a pulley. That is, the screw 20 is rotated by the injection shaft 19 being rotationally driven by the servomotor 24 for screw rotation.
In the plasticization/measurement process, the melted resin is stored in front of the screw 20, that is, nozzle 21-1 side of the heating cylinder 21 by the screw 20 being moved rearward while rotating in the heating cylinder 21. In the filling process, the melted resin stored in front of the screw is filled in the mold and pressurized so as to perform molding. At this time, a force pressing the resin is detected by the load cell 18 as a reaction force. That is, a resin pressure in front of the screw is detected. The detected pressure is amplified by a load cell amplifier 25 and is input to a controller 26.
A position detector 27 is attached to the pressure plate 14 to detect an amount of movement of the screw 20. A detection signal of the position detector is amplified by an amplifier 28 and is input to the controller 26. The detection signal is also used for detecting a moving velocity of the screw 20.
The controller 26 outputs to servo amplifiers 29 and 30 an electric current (torque) instruction corresponding to each of the above-mentioned processes in accordance with various kinds of setting values previously set by an operator through the input device 35. The servo amplifier 29 controls a drive current of the servomotor 11 so as to control an output torque of the servomotor 11. The servo amplifier 30 controls a drive current of the servomotor 24 so as to control a rotation speed of the servomotor 24. The servomotors 11 and 24 are provided with encoders 31 and 32, respectively, to detect a rotation speed. The rotation speeds detected by the encoders 31 and 32 are input to the controller 26, respectively.

It should be noted that the structure of the molding machine shown in FIG. 1 is merely to give convenience for explaining an outline of the injection molding machine, and is merely an example of the injection molding machine.

As mentioned above, in the injection molding machine, the resin is measured while melting by heat, and is extruded into a mold so as to mold a product. Here it is a very important factor in determining a quality of the product to control the pressure generated when extruding the resin into the mold to a predetermined pressure.

The melted resin measured in front of the screw 20 is extruded into the mold by the screw 20 being moved forward. At this time, there are known the following two methods as a control method of a pressure generated in front f the screw 20.

The first method is a pressure switch control method, and a description will be given of a case where it is applied to the injection molding machine of FIG. 1.

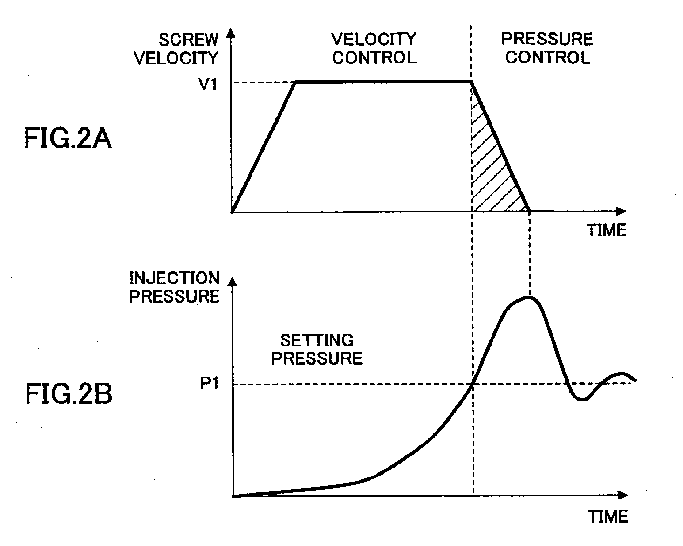

Referring to FIG. 2A, in the pressure switch control method, the screw 20 is moved forward initially at a predetermined velocity V1 in the injection process. At this time, the controller 26 receives the detection signal of the pressure acted on the screw 20 through the load cell amplifier 25, and switches to a pressure control to stop the screw 20 and maintain the detected pressure at a predetermined setting pressure P1 after the detected pressure reaches the previously set setting pressure P1. That is, when the detected pressure reaches the setting pressure P1 while the screw 20 is moved forward according a velocity control, the controller 26 stops the screw 20 so as to carry out the V/P switching.

However, in stopping the screw 20 after detected pressure reaches the setting pressure P1, as shown in FIG. 2B, a phenomenon in which an injection pressure rises during the deceleration happens (overshoot of the injection pressure).

Since in this phenomenon the time from starting the deceleration until stop is elongated as the forward velocity of the screw 20 is larger, a raising pressure is increased correspondingly. If this overshoot is large, the resin in the mold is excessively filled state, which results in burrs generated in a molded component.

A description will be given of the position switching control method of the second method.

In the position switching method, a screw position is previously set to define a timing to perform the V/P switching. Thereby, the screw 20 is initially moved forward at a predetermined velocity in the injection process. The controller 26 receives the detection signal of the screw position through obtained through the position detector 27 and the amplifier 28, and switches to the pressure control when the screw 20 reaches a previously set position (for example, refer to Japanese Laid Open Patent Application No. JP-A-6-170909 (FIG. 1, page 4).

However, also according to the position switch control method, since the injection pressure rises during the period from the screw 20 starting a deceleration until it stops, an unintentional pressure rise occurs until it stays at a pressure to be controlled, which gives bad influence to the product.

JP-A-08-090619 discloses a method of controlling an injection molding device in accordance with the features of the preamble of claim 1 In order to obtain an injection molding device that never causes a difference in a final in-mold pressure even with the change of the viscosity, elasticity, or the like of a molding material, contributes to a product quality enhancement, can stabilize a cycle time, and can raise a productivity, a hydraulic cylinder is so controlled as to make the speed of an injection screw constant. The hydraulic cylinder is so controlled as to lower the speed of the injection screw at a constant acceleration if an internal nozzle pressure increases to a predetermined threshold or more in a last stage of injection molding. At the same time, a pressure of a molding material in a mold is predicted by calculating a pressure increase in the mold. When the predicted in-mold pressure reaches a predetermined pressure, an acceleration constant control is changed over to a dwell control.

DISCLOSURE OF THE INVENTION

It is a general object of the present invention to provide an improved and useful control method of an injection molding machine in which the above-mentioned problems are eliminated.

A more specific object of the present invention is to provide a control method of an injection molding machine which can control a maximum pressure when extruding a melted resin into a mold.

Another object of the present invention is to provide a control method of an injection molding machine which can control a maximum pressure at the time of injection by predicting an injection pressure when extruding a melted resin into a mold based on simply modeled arithmetic expression.

A further object of the present invention is to provide a control method of an injection molding machine which can appropriately perform prediction of rising injection pressure which changes intricately depending on conditions.

In order to achieve the above-mentioned objects, there is provided according to the present invention a control method of an injection machine to control an injection pressure by a movement of a screw, comprising: detecting the injection pressure generated when the screw moves forward in an injection process; predicting a rising injection pressure $\Delta P$ when decelerating the screw at a previously set deceleration of the screw from a time of detection of the injection pressure; comparing the predicted rising injection pressure $\Delta P$ and a previously set pressure P with each other; and decelerating the screw at a previously set deceleration based on a result of the comparison.

In the above-mentioned control method, the prediction of the rising injection pressure $\Delta P$ is preferably performed based on an arithmetic expression represented by $\Delta P=dP \cdot (V0/k)$, where dP is an injection pressure change in a unit time, V0 is a forward moving velocity of the screw and k is a coefficient.

Additionally, in the above-mentioned control method, a coefficient k, which is a constant part of the arithmetic expression, may be calculated back as an ideal coefficient kmodel by plugging various kinds of performance result values obtained by at least one shot into the arithmetic expression so as to perform molding by reflecting the ideal coefficient kmodel in subsequent molding.

Further, in the above-mentioned control method, a pressure, which is a sum of a rising pressure after prediction and a predicted delay pressure, may be used as the rising injection pressure $\Delta P$ in the back calculation of the coefficient k; the rising pressure after prediction may be given as a value (Pmax-Pfb1), which is calculated by subtracting an injection pressure Pfb1 at a time when a value of a sum of the rising pressure after prediction and the predicted delay pressure is determined as not coincide with a maximum injection pressure from the maximum injection pressure Pmax obtained in the molding of the one shot; and the predicted delay pressure may be given as a value (Pfb1+$\Delta P$-Pref), which is calculated by adding to the injection pressure Pfb1 at a time when the discrepancy is determined the rising injection pressure $\Delta P$ at that time, and subtracting the setting pressure Pref from the added value. Further, the coefficient k may be obtained by using a pressure detected when determined as exceeding the previously set pressure P.

Additionally, in the above-mentioned control method, a value of the coefficient k at a time when actual molding may be performed and an operator may determine that a molded component is a nondefective good is used as the ideal coefficient kmodel. Further in the above-mentioned control method, the coefficient k may be 2·dV, where dV is the previously set deceleration.

Additionally, in the above-mentioned control method, the previously set deceleration may be corrected by using the coefficient k obtained from a performance value obtained by molding of at least one shot. Alternatively, a time of starting deceleration may be corrected by using the coefficient k obtained from a performance value obtained by molding of at least one shot.

Additionally, in the above-mentioned control method, a value, which is a sum of a rising pressure after prediction and a predicted delay pressure, may be used as the rising injection pressure $\Delta P$ in the back calculation of the coefficient k; the rising pressure after prediction may be given as a value (Pmax-Pfb1), which is calculated by subtracting an injection pressure Pfb1 at a time when a value of a sum of the rising pressure after prediction and the predicted delay pressure is determined as not coincide with a maximum injection pressure from the maximum injection pressure Pmax obtained in the molding of the one shot; and the predicted delay pressure may be given as a value (Pfb1+$\Delta P$-Pref), which is calculated by adding the rising injection pressure $\Delta P$ at a time when the discrepancy is determined, to the injection pressure Pfb1 at that time, and subtracting the setting pressure Pref from the added value.

Further, in the above-mentioned control method, an average value of a plurality of back calculation values of the coefficient k obtained by performing a plurality of shots of test molding may be used as the coefficient kmodel. In this control method the plurality of shots of test molding may be performed while reflecting a back calculation value of the coefficient k obtained by a preceding shot. Additionally, a moving average value of a plurality of back calculation values of the coefficient k corresponding to a plurality of shots equal to the plurality of shots may be calculated as the coefficient kmodel even in actual molding.

Additionally, in the control method according to the present invention, the prediction of the rising injection pressure $\Delta P$ and the determination may be repeated at an arbitrary time interval.

In the control method according to the present invention, the previously set deceleration may be corrected by using a performance value obtained by molding of at least one shot. Alternatively, a time of starting deceleration may be corrected by using a performance value obtained by molding of at least one shot.

Further, a difference between a maximum injection pressure detected by molding of at least one shoe and the previously set pressure P may be obtained, and the previously set pressure P may be corrected by using the obtained difference.

According to the above-mentioned invention, the maximum pressure when extruding a melted resin into a mold can be controlled to be close to a setting pressure in a state where an overshoot is suppressed, which prevents generation of burrs due to excessive filling. Additionally, since the screw is temporarily stopped, a behavior of the pressure control (pressure-holding process) thereafter can be stabilized.

Moreover, according to the present invention, the prediction of the rising injection pressure can be exactly performed by correcting the coefficient, which is a constant part in the arithmetic expression, to be close to an ideal value.

BRIEF DESCRIPTION OF THE DRAWINGS

FIG. 1 is a diagram showing a structure of a part on an injection apparatus side of a conventional electric type injection molding machine.

FIG. 2A is a graph showing a velocity-time characteristic of a screw in an injection process.

FIG. 2B is a graph showing a change in an injection pressure in the injection process.

FIG. 3A is a graph showing a change in a screw velocity controlled by a control method according to a first embodiment of the present invention.

FIG. 3B is a graph showing a change in an injection pressure controlled by the control method according to the first embodiment of the present invention.

FIG. 4 is a flowchart of a process which a controller performs so as to perform the control method according to the first embodiment of the present invention.

FIG. 5A is a graph showing a screw velocity which is set when a predicted injection pressure does not reach a setting pressure even when it is a time to start a deceleration.

FIG. 5B is a graph showing a case where a predicted injection pressure does not reach a setting pressure even when it is a time to start a deceleration.

FIG. 6A is a graph showing a change in a screw velocity controlled by a control method according to a second embodiment of the present invention.

FIG. 6B is a graph showing a change in an injection pressure controlled by the control method according to the second embodiment of the present invention.

FIG. 7 is an illustration for explaining a ring buffer.

FIG. 8 is a flowchart of a change process of a deceleration in a control method according to a third embodiment of the present invention.

FIG. 9A is a graph showing a change in the deceleration.

FIG. 9B is a graph showing a change in an injection pressure when a detected maximum pressure does not reach a setting pressure.

FIG. 10 is a flowchart of a correction process of a setting pressure in a control method according to a fourth embodiment of the present invention.

FIG. 11A is a graph showing a change in an injection pressure when the detected maximum pressure exceeds the setting pressure.

FIG. 11B is a graph showing a correction of the setting pressure.

BEST MODE FOR CARRYING OUT THE INVENTION

A description will now be given, with reference to the drawings, of embodiments of the present invention.

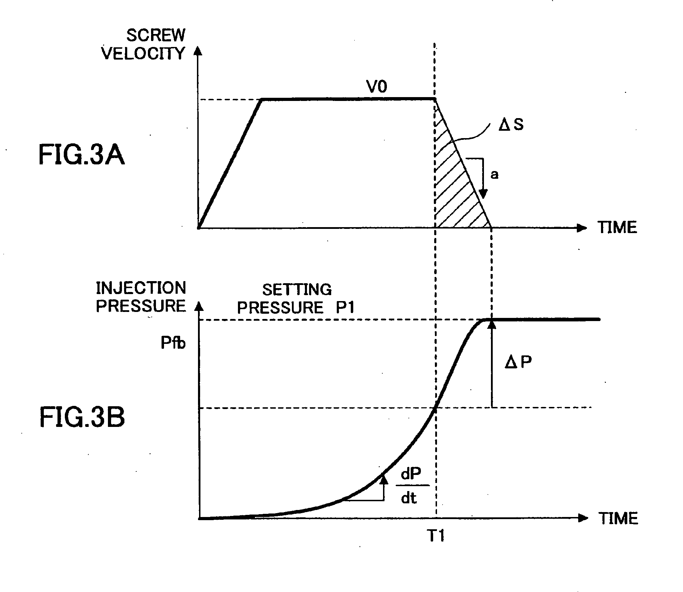

First, a description will be given, with reference to FIGS. 3A and 3B, of a control method of an injection molding machine according to a first embodiment of the present invention. Although the following description assumes a case where the control method according to the present embodiment is applied to an injection molding machine shown in FIG. 1, the control method according to the present invention is not limited to an electric type injection molding machine shown in FIG. 1 and is applicable to other various molding machines.

In the control method according to the present invention, when the screw 20 starts to decelerate at a previously set acceleration at the present time and stops while the screw 20 moves forward, it is predicted how high a resin pressure (that is, an injection pressure) goes up. Then, the operation of the screw 20 is stopped when if it is determined that a value of a sum of the detected injection pressure and the predicted injection pressure exceeds a previously set setting pressure.

FIGS. 3A and 3B are diagrams for explaining the control method according to the present invention, FIG. 3A is a graph showing a screw velocity-time characteristic, and FIG. 3B is a graph showing an injection pressure-time characteristic. In FIG. 3A, a parameter Pfb represents a detection pressure detected by the load cell 18, a parameter $\Delta P$ represents a predicted rising pressure, and a parameter dP/dt represents a differential value of the injection pressure. Moreover, in FIG. 3B, a parameter V0 represents a forward velocity of the screw 20 a parameter a represents an acceleration during a stop process (that is, a deceleration) of the screw 20, and a parameter $\Delta s$ represents a velocity area (an area of a hatched area shown in FIG. 3A = a moving distance of the screw 20) which corresponds a distance of the screw 20 from starting a deceleration until it stops.

The rising pressure, that is, the pressure change $\Delta P$ has a correlation with the velocity area $\Delta S$. The relationship can be represented as $\Delta P = \alpha \cdot \Delta S$ using a constant k.

Since the velocity area $\Delta S$ can be represented as $\Delta S = V0 \cdot (V0/a)/2 = V0^2/2a$, the predicted rising pressure $\Delta P$

can be represented as the following expression (1).

Expression (1)

$$P = \frac{\alpha V0^2}{2a} = \frac{\alpha V0^2}{2(dV/dt)} = \frac{\alpha V0^2 dt}{2dV}$$

$$= \alpha V0 dt \cdot \frac{V0}{2dV} = dP \cdot \frac{V0}{2dV}$$

where dP/dt = $\alpha$V

Here, among the plurality of elements for obtaining predicted rising pressure $\Delta$P of the expression (1), the element dP is a pressure change per unit time, and can be calculated using the detection pressure Pfb. The element V0 is detectable as a forward velocity of the screw 20. The element dV is a velocity change of the screw 20 per unit time, and is previously set as a deceleration a.

The controller 26 calculates the expression (1) using each of the above-mentioned elements. Especially, the controller 26 performs the above-mentioned arithmetic operation at intervals of minute time (that is, a control sampling time) during a forward movement of the screw 20 so as to calculate the predicted rising pressure.

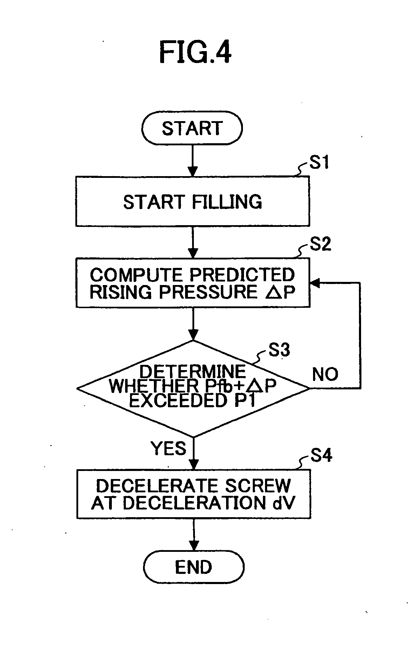

A description will be given, with reference to FIG. 4, of a control operation of the controller 26 for performing the above-mentioned arithmetic operation. FIG. 4 is a flowchart of the control operation of the controller 26 in one shot.

Referring to FIG. 4, first in the injection process of step S1, the controller 26 moves the screw 20 forward at a previously determined velocity. Thereby, resin filling is started. Next, in step S2, the controller 26 computes predicted rising pressure $\Delta$P based on the expression (1) using the pressure detection value detected at the sampling time interval.

Then, in step S3, the controller determines whether or not a sum (Pfb+$\Delta$P) of the detection pressure Pfb at the time of prediction and a computed predicted rising pressure $\Delta$P exceeds the previously set setting pressure P1. If it is determined that (Pfb+$\Delta$P) exceeds the setting pressure P1, the process proceeds to step S4 where the controller decelerates and stops the screw 20 by a previously set deceleration. On the other hand, if it is determined that (Pfb+$\Delta$P) does not exceed the setting pressure P1, the process returns to step S2.

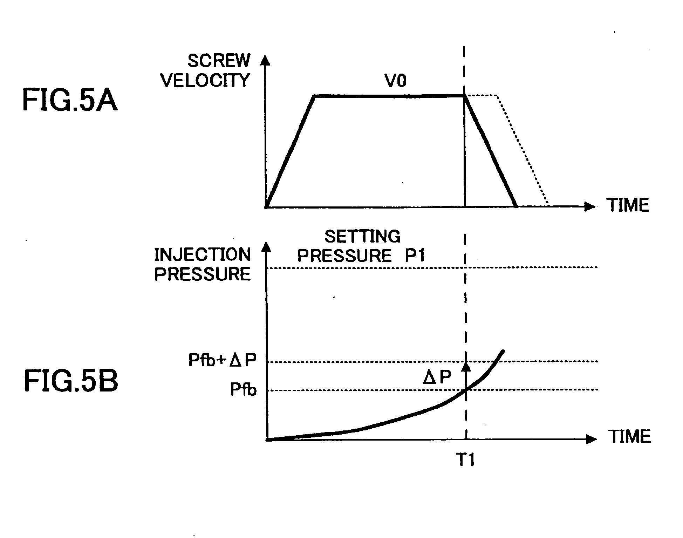

It should be noted that the process of the above-mentioned steps S1-S3 is repeatedly performed at intervals of minute time (control sampling time). Additionally, if it is determined, in step S3, that (Pfb+$\Delta$P) does not exceeds the setting pressure P1, that is, if it is determined that (Pfb+$\Delta$P) does not reach the setting pressure P1 even at a time T1 at which a deceleration of the screw is started as shown in FIG. 5B, steps S3 and S2 are repeated until it is reached, and the deceleration is started when (Pfb+$\Delta$P) reaches the setting pressure P1. In this case, as a result, a control is performed so as to delay the deceleration start time as shown in FIG. 5A.

According to the present invention, a maximum pressure when extruding a melted resin into a mold can be controlled to the previously set setting pressure P1 by the above-mentioned control operation.

As mentioned above, although the case where the control method according to the present embodiment is applied to the injection molding machine of the structure shown in FIG. 1, the control method according to the present embodiment is not limited to the injection molding machine as mentioned before. For example, in a case where a resin pressure sensor is provided on a head side of the heating cylinder, a detection value thereof may be uses as the detection pressure Pfb. Additionally, the velocity of the screw may be calculated using a detection signal of an encoder provided to the servomotor for injection. Additionally, the control method according to the present embodiment is not limited to the electric type injection molding machine, and is applicable to a hydraulic type injection molding machine. In this case, the injection pressure is detected by, for example, a hydraulic pressure sensor of an injection cylinder.

As mentioned above, according to the control method according to the first embodiment of the present invention, the maximum pressure when extruding a melted resin into a mold can be controlled to be close to a setting pressure in a state where an overshoot is suppressed, which prevents generation of burrs due to excessive filling. Additionally, since a velocity of the screw is temporarily set to 0, that is, the screw is temporarily stopped, a behavior of the pressure control (pressure-holding process) thereafter can be stabilized.

Next, a description will be given of a control method of a molding machine according to the second embodiment of the present invention.

In the control method according to the second embodiment, the screw is stopped according to a previously set deceleration so as to be permitted to control an injection pressure, especially, a maximum pressure, which generates when extruding a melted resin into a mold. In this case, a rising value in the injection pressure from a start of deceleration to stop is predicted as a predicted rising pressure, and it is determined whether a sum of the predicted predicted rising pressure and the present injection pressure exceeds a previously set pressure.

Then, at a time when it is determined that it exceeds, the screw is caused to decelerate at a previously set screw deceleration so as to perform a pressure control according to the screw velocity control.

This is based on the following reasons. That is, if an injection speed becomes high-speed, it becomes difficult to perform a pressure feedback control according to real time pressure detection. This is because the response of the pressure feedback control goes down. Thus, it is desirable to adopt not the pressure feedback control but a velocity feedback control. This is because the screw velocity can be controlled with high response according to the velocity feedback control.

Especially, a modeled arithmetic expression is used for prediction of the predicted rising pressure. There exists a coefficient in the arithmetic expression, which coefficient is a constant part to couple the screw velocity and the injection pressure to each other. In the present embodiment, the coefficient is corrected to an ideal numerical value.

Although in the control method according to the present embodiment is applicable to the injection molding machine shown in FIG. 1 and the description was given to the case where it is applied to the injection molding machine of the structure of FIG. 1 in the present embodiment, the present invention is not limited to the injection molding machine shown in FIG. 1.

The predicted rising pressure $\Delta P$ in the case of stopping the screw at a previously set deceleration at the time of the V/P switching can be modeled according to the following expression (2).

$$\Delta P = dP \cdot (V0/2dV) \qquad (2)$$

In the expression (2), dP is an injection pressure change per unit time, and this can be realized by using a detection value of the injection pressure. V0 is a forward moving velocity, and this also uses a detection value of the screw velocity. dV is a velocity change per unit time and is a preciously set deceleration, which can set arbitrarily. In FIG. 1, the detection value of the load cell 18 can be used for the detection value of the injection pressure and the detection value of the position detector 27 or the detection value of the encoder 31 can be used for the detection value of the screw velocity, respectively. Additionally, the previously set deceleration is set by the input device 35, and the following various setting values are also set by the input device 35. Then, the controller 26 performs the following process by using those values.

However, since the coupling of the injection pressure and the screw velocity is carried out according to the coefficient k by setting dP=k V0dt in the expression (2), $\Delta P$ is represented by expression (3) by bringing together with the parameter 2dV, that is, the previously set deceleration.

$$\Delta P = dP \cdot (V0/k) \qquad (3)$$

The controller 26 repeats the above-mentioned arithmetic operation at a predetermined sampling period in the injection process so as to perform the determination mentioned later by using an operation result for each arithmetic operation.

If it acts as the above-mentioned model, there is no problem in regarding as k=2dV and using the expression (2) as a modeled arithmetic expression, however, in practice, a viscoelasticity of a resin to be molded, sliding resistance of the machine and the like are related, which results in that it does not act as the model and a slope of pressure cannot always be constant.

Thus, in the present embodiment, an ideal coefficient kmodel is computed as the coefficient k in the controller 26 by actually performing at least one shot of test molding and using various performance values obtained when a measured resin is extruded into a mold, and the coefficient k is used by replacing the coefficient k of the expression (3).

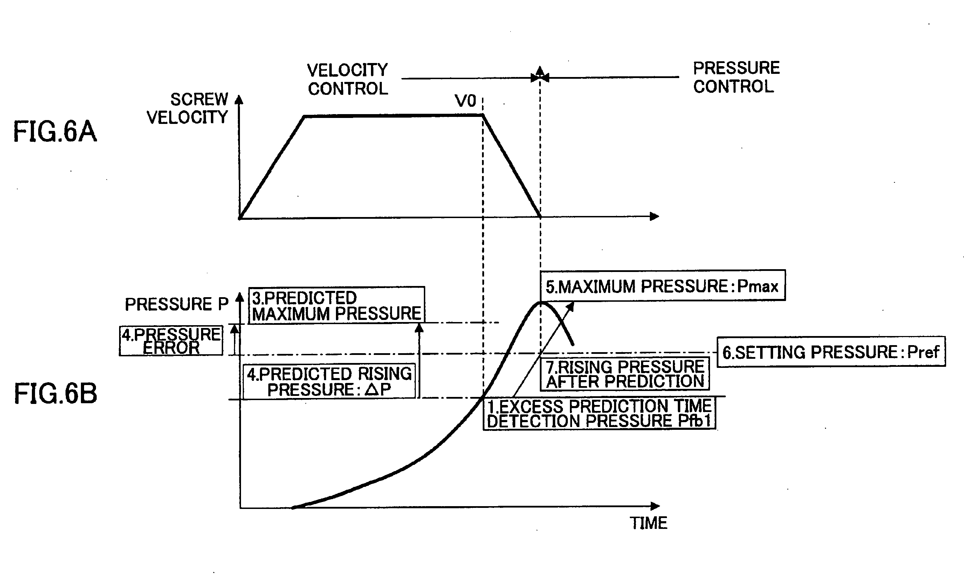

According to the above-mentioned test molding, the various performance values generated when a measured resin is actually extruded into a mold the resin and the model for predicting the predicted rising pressure have the relationship shown in FIGS. 6A and 6B. In FIG. 6B, a waveform indicated by bold solid lines is a performance value of the injection pressure, that is, a waveform indicating the detection pressure Pfb.

1. Excess prediction time detection pressure (Pfb1): detection pressure at a time when it is determined that a pressure (Pfb+$\Delta P$) which is a sum of the predicted rising pressure $\Delta P$ obtained by computation and the detection pressure Pfb obtained at the time of the prediction exceeds the previously set setting pressure Pref.
2. Predicted rising pressure ($\Delta P$): computed based on the expression (3).

3. The predicted maximum pressure (Pfb+ΔP): since in the calculation based on the expression (3) a pressure slope is not always constant in each shot, it is difficult to determine whether (Pfb+ΔP) is equal to the setting pressure. The actually obtained value must be a value considering the following pressure error.

4. Pressure error (Pfb1+ΔP-Pref): representing how much degree the predicted maximum pressure is shifted from the setting pressure Pref.

5. Maximum pressure (Pmax): a maximum pressure in a case where it is raised due to not acting as a model as mentioned above.

6. Setting pressure (Pref)

7. Rising pressure after prediction (Pmax-Pfb1)

The controller 26 calculates back the ideal coefficient kmodel by the following expression (4) by using various performance values at a time of molding of one shot. Additionally, the pressure error is added to the rising pressure after prediction at that time so as to absorb an error duet to a delay in sampling or the like.

Expression (4)

$$kmodel = dP \cdot \frac{V0}{ri\sin g \ pressure \ after \ prediction + pressure \ error}$$

$$= \frac{dP \cdot V0}{P\max - Pfb1 + Pfb1 + \Delta P - Pref}$$

$$= \frac{dP \cdot V0}{P\max + \Delta P - Pref}$$

where, dP is a difeential value of injection pressure at a time of prediction of excess;

V0 is a screw velocity at a time of prediction of excess;

P max is a screw velocity at a time of prediction of excess;

ΔP is a prediction risin g pressure at a time of prediction of excess;

Pref is a setting pressure.

A description will be given below of an action.

The test molding is performed by one shot after an appropriate coefficient k is set in the expression (3). It should be noted that the coefficient (2) may be set as k=2dv based on the model of the expression (2).

The ideal coefficient kmodel is computed based on the expression (4) from the various performance values (dP, V0, Pmax, ΔP) obtained by one shot molding according to the setting and the setting pressure (Pref). After the computation, this is reflected in the coefficient at an actual molding shot after a next time.

As for a method of reflection, the following methods 1-3 are applicable.

1. Use the obtained coefficient immediately at the shot of next time.

2. Perform molding of several shots while reflecting a coefficient obtained by test molding of several shots or a shot of last time so as to use an average value of the coefficients obtained respectively (it should be noted that a case where molding condition (setting) is changed is excluded). This method may be used continuously even after entering actual molding.

3. Perform molding of several shots while reflecting a coefficient obtained by a shot of last time so as to sequentially store the coefficients obtained respectively in a ring buffer. Thereafter, a moving average value is continuously computed in actual molding to as to use them as an actual coefficient.

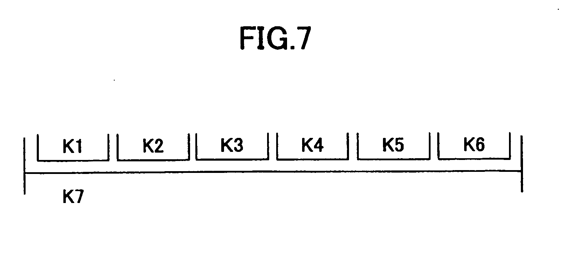

The ring buffer is one in which a memory having a plurality of areas which can store a plurality of arbitrary parameters is prepared so as to sequentially store a computed coefficient (kmodel) in each area of the memory and, if it becomes full, a newest coefficient is stored in the first area. This is repeated and, simultaneously, an average value of the coefficients stored in all areas is obtained at each time one coefficient is newly stored. That is, the example shown in FIG. 7 is a method in which an average value of the newest six values of the coefficient is always calculated so as to use it at a subsequent shot.

Separation of a model and performance may occur frequently, and there is a limitation of a certain level in pursuing a model further in response to that. Additionally, it is very difficult for a fluid having a viscoelasticity such as plastic resin. However, under a limited condition, there exists certainly an ideal coefficient (kmodel), it can become capable of responding to various states by calculating back that as in the present invention.

In the control method according to the present embodiment, the injection pressure Pfb generated when the screw moves forward in the injection process, and the rising injection pressure $\Delta P$ is predicted in the case where the screw is stopped at the previously set deceleration of the screw from the time of the detection. Then, it is determined whether the sum of the predicted rising injection pressure $\Delta P$ and the present injection pressure Pfb exceeds the previously set pressure Pref so as to perform the pressure control by the screw velocity control by decelerating the screw at the previously set deceleration of the screw at a time when it is determined as it exceeds. A section to realize the pressure control by the screw velocity control corresponds to a duration from a time when the screw velocity V0 starts to decrease until a time when it is changed to an actual pressure control.

Consequently, the highest pressure of the injection pressure can be controlled to be brought close to the setting pressure Pref without exceeding the setting pressure Pref greatly as in FIG. 6B.

As mentioned above, although the case where the control method according to the present embodiment is applied to the injection molding machine of the structure shown in FIG. 1, the control method according to the present embodiment is not limited to the injection molding machine as mentioned before. For example, in a case where a resin pressure sensor is provided on a head side of the heating cylinder, a detection value thereof may be uses as the detection pressure Pfb. Additionally, the velocity of the screw may be calculated using a detection signal of an encoder provided to the servomotor for injection. Additionally, the control method according to the present embodiment is not limited to the electric type injection molding machine, and is applicable to a hydraulic type injection molding machine. In this case, the injection pressure is detected by, for example, a hydraulic pressure sensor of an injection cylinder.

As mentioned above, according to the present embodiment, the highest pressure of the injection pressure can be controlled to be brought close to the setting pressure by predicting the injection pressure at the time of pushing a melted resin into a mold based on the modeled arithmetic expression, which prevents generation of burrs due to excessive filling. Additionally, the prediction of the rising injection pressure can be appropriately performed by making the coefficient, which is a constant part in the above-mentioned arithmetic expressing, correctable to be brought close to an ideal value.

Next, a description will be given of a control method according to a third embodiment of the present invention.

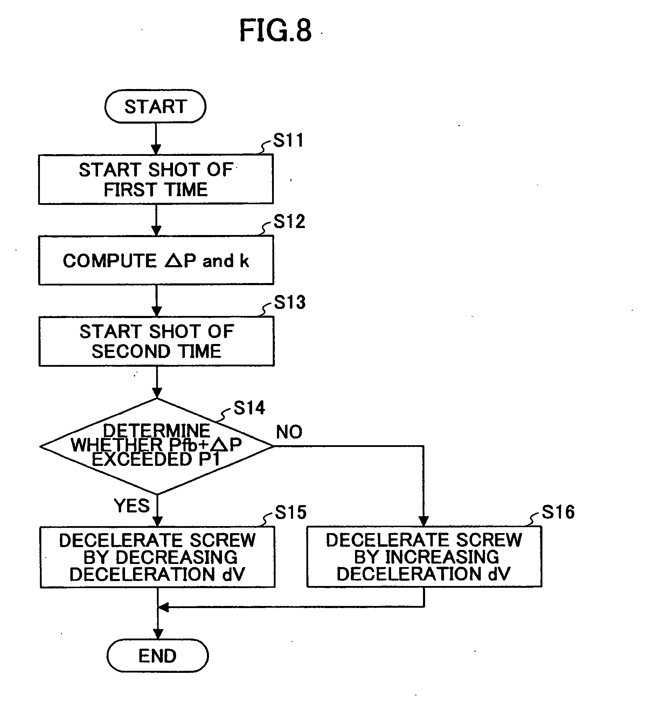

In the control method according to the present embodiment, a deceleration (dV or k) of the screw after the deceleration start time of the screw is changed. FIG. 8 is a flowchart of a process which changes the deceleration of the screw in the control method according to the present invention.

In FIG. 8, first the molding machine is actually operated, in step S11, so as to perform an initial shot (first shot). Next, a deceleration start time T1 is computed, in step S12, according to the predicted rising pressure $\Delta P$ of the injected resin and the coefficient k. Subsequently, a second shot is performed in step S13. Then, it is determined, in step S14, whether or not Pfb+$\Delta P$ at the deceleration start time T1 in the second shot exceeds the setting pressure P1.

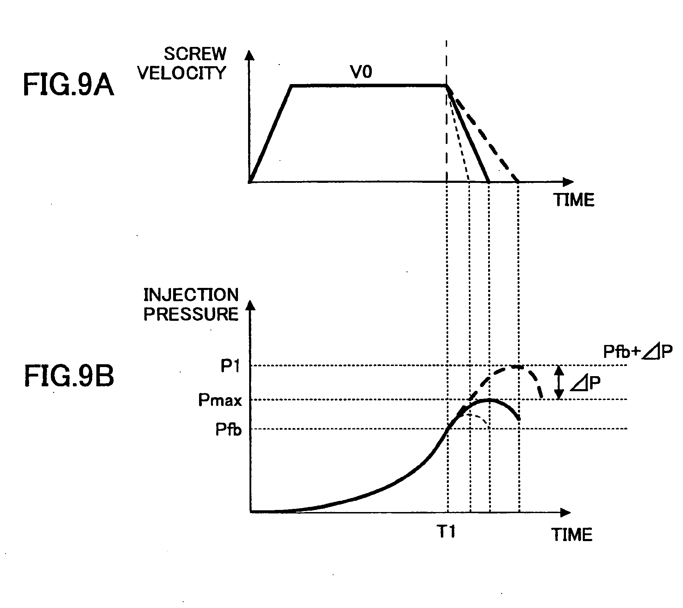

If it is determined, in step S14, that the maximum pressure Pmax does not exceed the setting pressure P1 obtained as Pfb+$\Delta P$ at the deceleration start time T1 as shown in FIG. 9B, the process proceeds to step S15. In step S15, the screw is decelerated by decreasing the deceleration dV (or k) of the screw. That is, the screw is decelerated by setting a slope of the deceleration to a gentle slope as indicated by a coarse dotted line in FIG. 9A. Thereby, rising of the resin pressure after the deceleration start time T1 of the screw becomes large, and the actual maximum pressure of the resin can be brought close to the target setting pressure.

On the other hand, if it is determined, in step S14, that the maximum pressure Pmax exceeds the setting pressure P1 obtained as Pfb+$\Delta P$ at the deceleration start time T1, the process proceeds to step S16. In step S16, the screw is decelerated by increasing the deceleration dV (or k) of the screw. That is, the screw is decelerated by setting a slope of the deceleration to a steeper slope as indicated by a fine dotted line in FIG. 9A. Thereby, rising of the resin pressure after the deceleration start time T1 of the screw becomes small, and the actual maximum pressure of the resin can be brought close to the target setting pressure.

Next, a description will be given of a control method according to the present embodiment.

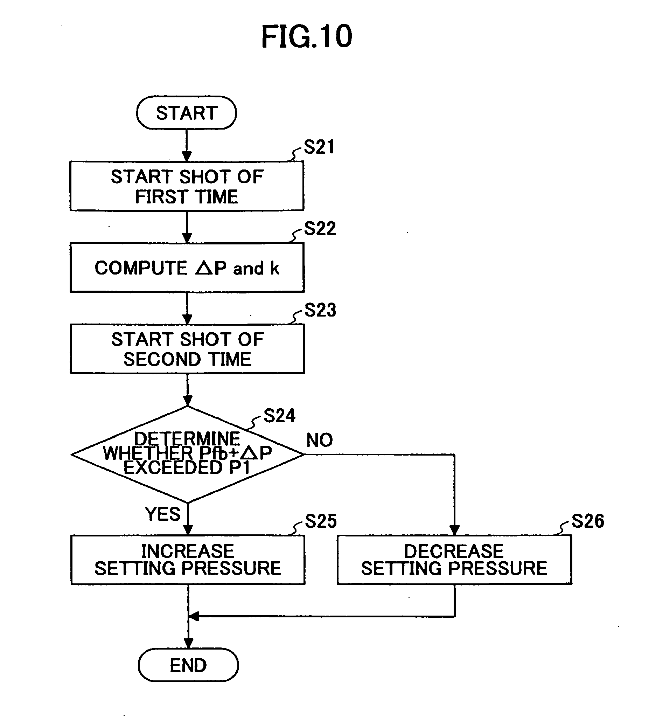

In the control method according to the present embodiment, a maximum pressure Pmax of the resin is controlled to be brought close to the target setting pressure by comparing the detected maximum pressure Pmax of the resin with the setting pressure and correcting the setting pressure P1. FIG. 10 is a flowchart of a process of correcting the setting pressure P1 in the control method according to the present invention.

In FIG. 10, first the molding machine is actually operated, in step S21, so as to perform an initial shot (first shot). Next, the predicted rising pressure $\Delta P$ of the injected resin and the coefficient k are computed. Subsequently, a second shot is performed, in step S23, so as to detect an actual maximum pressure Pmax of the resin. Then, it is determined, in step S24, whether or not the maximum pressure Pmax exceeds the setting pressure P1 (that is, the predicted maximum pressure (Pfb+$\Delta P$)) in the second shot.

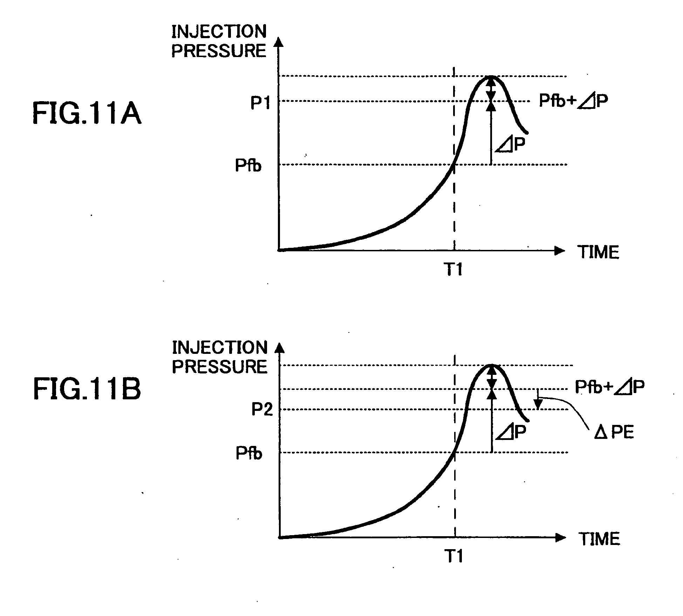

If it is determined, in step S24, that the actually detected maximum pressure Pmax exceeds the setting pressure P1 as shown in FIG. 11B, the process proceeds to step S25. In step S25, a process is performed so as to decrease the value of setting pressure P1 by the error PE. That is, a setting pressure P2 is set by decreasing an amount corresponding to the excess of the actually detected maximum pressure Pmax to the predicted maximum pressure (Pfb+$\Delta P$). Thereby,

rising of the resin pressure after the deceleration start time T1 of the screw becomes small, and the actual maximum pressure of the resin can be brought close to the target setting pressure.

On the other hand, if it is determined, in step S24, that the actually detected maximum pressure Pmax does not exceed the setting pressure P1, the process proceeds to step S26. In step S26, a process is performed so as to increase the value of the setting pressure P1 by the error ΔPE of ΔP. That is, the value of ΔP is increased by an amount corresponding to shortage of the actually detected maximum pressure Pmax to the predicted maximum pressure (Pfb+ΔP). Thereby, rising of the resin pressure after the deceleration start time T1 of the screw becomes large, and the actual maximum pressure of the resin can be brought close to the target setting pressure P1.

It should be noted that the correction method of ΔP shown in the second embodiment can be applied to the first, third and fourth embodiments.

The present invention is not limited to the specifically disclosed embodiments, and variations and modifications may be made without departing from the scope of the present invention as defined by the appended claims.

**Claims**

1. A control method of an injection machine to control an injection pressure by a movement of a screw, comprising:

   detecting the injection pressure generated when said screw moves forward in an injection process; and
   predicting a rising injection pressure ΔP when decelerating the screw at a previously set deceleration of the screw from a time of detection of the injection pressure;
   **characterized by**:

   comparing the predicted rising injection pressure ΔP and a previously set pressure P with each other; and
   decelerating said screw at a previously set deceleration based on a result of the comparison.

2. The control method as claimed in claim 1, wherein the prediction of said rising injection pressure ΔP is performed based on an arithmetic expression represented by $\Delta P = dP \cdot (V0/k)$, where dP is an injection pressure change in a unit time, V0 is a forward moving velocity of the screw and k is a coefficient.

3. The control method as claimed in claim 2, wherein a coefficient k, which is a constant part of said arithmetic expression, is calculated back as an ideal coefficient kmodel by plugging various kinds of performance result values obtained by at least one shot into said arithmetic expression so as to perform molding by reflecting said ideal coefficient kmodel in subsequent molding.

4. The control method as claimed in claim 3, wherein:

   a pressure, which is a sum of a rising pressure after prediction and a predicted delay pressure, is used as said rising injection pressure ΔP in the back calculation of said coefficient k;
   said rising pressure after prediction is given as a value (Pmax-Pfb1), which is calculated by subtracting an injection pressure Pfb1 at a time when a value of a sum of said rising pressure after prediction and said predicted delay pressure is determined as not coincide with a maximum injection pressure from the maximum injection pressure Pmax obtained in the molding of said one shot; and
   said predicted delay pressure is given as a value (Pfb1+ΔP-Pref), which is calculated by adding to the injection pressure Pfb1 at a time when said discrepancy is determined the rising injection pressure ΔP at that time, and subtracting said setting pressure Pref from the added value.

5. The control method as claimed in claim 2, wherein a value of said coefficient k at a time when actual molding is performed and an operator determines that a molded component is a nondefective good is used as the ideal coefficient kmodel.

6. The control method as claimed in claim 2, wherein said coefficient k is 2·dV, where dV is said previously set deceleration.

7. The control method as claimed in claim 6, wherein said previously set deceleration is corrected by using said coefficient k obtained from a performance value obtained by molding of at least one shot.

**8.** The control method as claimed in claim 6, wherein a time of starting deceleration is corrected by using said coefficient k obtained from a performance value obtained by molding of at least one shot.

**9.** The control method as claimed in claim 6, wherein: a pressure, which is a sum of a rising pressure after prediction and a predicted delay pressure, is used as said rising injection pressure ΔP in the back calculation of said coefficient k; said rising pressure after prediction is given as a value (Pmax-Pfb1), which is calculated by subtracting an injection pressure Pfb1 at a time when a value of a sum of said rising pressure after prediction and said predicted delay pressure is determined as not coincide with a maximum injection pressure from the maximum injection pressure Pmax obtained in the molding of said one shot; and said predicted delay pressure is given as a value (Pfb1+ΔP-Pref), which is calculated by adding the rising injection pressure ΔP at a time when said discrepancy is determined, to the injection pressure Pfb1 at that time, and subtracting said setting pressure Pref from the added value.

**10.** The control method as claimed in claim 6, wherein said coefficient k is obtained by using a pressure detected when determined as exceeding said previously set pressure P.

**11.** The control method as claimed in claim 2, wherein an average value of a plurality of back calculation values of the coefficient k obtained by performing a plurality of shots of test molding is used as said coefficient kmodel.

**12.** The control method as claimed in claim 2, wherein said plurality of shots of test molding are performed while reflecting a back calculation value of said coefficient k obtained by a preceding shot.

**13.** The control method as claimed in claim 2, wherein a moving average value of a plurality of back calculation values of the coefficient k corresponding to a plurality of shots equal to said plurality of shots is calculated as said coefficient kmodel even in actual molding.

**14.** The control method as claimed in claim 1, wherein the prediction of said rising injection pressure ΔP and said determination are repeated at an arbitrary time interval.

**15.** The control method as claimed in claim 1, wherein said previously set deceleration is corrected by using a performance value obtained by molding of at least one shot.

**16.** The control method as claimed in claim 1, wherein a time of starting deceleration is corrected by using a performance value obtained by molding of at least one shot.

**17.** The control method as claimed in claim 1, wherein a difference between a maximum injection pressure detected by molding of at least one shoe and said previously set pressure P is obtained, and said previously set pressure P is corrected by using the obtained difference.


**Patentansprüche**

**1.** Steuerverfahren für eine Spritzgussmaschine bzw. Einspritzmaschine, um einen Einspritzdruck durch eine Bewegung einer Schraube bzw. Schnecke zu steuern, das Folgendes aufweist:

Detektieren des Einspritzdrucks, der erzeugt wird, wenn sich eine Schnecke in einem Einspritzprozess vorwärts bewegt; und

Vorhersagen eines ansteigenden Einspritzdrucks ΔP, wenn die Schnecke mit einer zuvor eingestellten Verzögerung bzw. Abbremsung der Schnecke von einem Zeitpunkt der Detektion des Einspritzdrucks an verzögert bzw. abgebremst wird;

**gekennzeichnet durch**:

Vergleichen des vorhergesagten Einspritzdrucks ΔP und eines zuvor eingestellten Drucks P miteinander; und

Abbremsen der Schnecke mit einer zuvor eingestellten Abbremsung basierend auf einem Ergebnis des Vergleichs.

2. Steuerverfahren gemäß Anspruch 1, wobei die Vorhersage des ansteigenden Einspritzdrucks $\Delta P$ basierend auf einem arithmetischen Ausdruck ausgeführt wird, der durch $\Delta P = dP \cdot (V0/k)$ dargestellt wird, wobei dP eine Einspritzdruckveränderung in einer Zeiteinheit ist, V0 eine Vorwärtsbewegungsgeschwindigkeit der Schnecke ist und k ein Koeffizient ist.

3. Steuerverfahren gemäß Anspruch 2, wobei der Koeffizient k, der ein konstanter Teil des arithmetischen Ausdrucks ist, als ein idealer Koeffizient kmodel durch Einsetzen verschiedener Arten von Leistungsergebniswerten zurückberechnet wird, die durch zumindest ein Einsetzen bzw. eine Beschickung in den arithmetischen Ausdruck erhalten werden, um ein Formen durch Wiederspiegeln des idealen Koeffizienten kmodel in dem nachfolgenden Formen auszuführen.

4. Steuerverfahren gemäß Anspruch 3, wobei:

   ein Druck, der eine Summe eines ansteigenden Drucks nach der Vorhersage und einem vorhergesagten Verzögerungsdruck ist, als ein ansteigender Einspritzdruck $\Delta P$ in der Zurückrechnung des Koeffizienten k verwendet wird;
   der ansteigende Druck nach der Vorhersage als ein Wert (Pmax-Pfb1) gegeben ist, der durch Subtrahieren eines Einspritzdrucks Pfb1 zu einem Zeitpunkt, wenn ein Wert einer Summe des ansteigenden Drucks nach der Vorhersage und dem vorhergesagten Verzögerungsdruck als nicht übereinstimmend mit einem maximalen Einspritzdruck bestimmt wird, von dem maximalen Einspritzdruck Pmax, berechnet wird, der beim Formen der einen Beschickung erhalten wird; und
   der vorhergesagte Verzögerungsdruck als ein Wert (Pfb1 + $\Delta P$-Pref) gegeben ist, der durch Addieren zu dem Einspritzdruck Pfb1 zu einem Zeitpunkt,
   an dem die Diskrepanz bestimmt wird, des ansteigenden Einspritzdrucks $\Delta P$ zu diesem Zeitpunkt, und Subtrahieren des Einstellungsdrucks Pref von dem addierten Wert berechnet wird.

5. Steuerverfahren gemäß Anspruch 2, wobei ein Wert des Koeffizienten k zu einem Zeitpunkt, an dem das tatsächliche Formen ausgeführt wird und ein Bediener bestimmt, dass eine geformte Komponente ein nicht fehlerhaftes Gut ist, als der ideale Koeffizient kmodel verwendet wird.

6. Steuerverfahren gemäß Anspruch 2, wobei der Koeffizient k 2·dV ist, wobei dV die zuvor eingestellte Abbremsung ist.

7. Steuerverfahren gemäß Anspruch 6, wobei die zuvor eingestellte Abbremsung durch Verwendung des Koeffizienten k korrigiert wird, der aus einem Leistungswert erhalten wird, der durch Formen von zumindest einer Beschickung erhalten wird.

8. Steuerverfahren gemäß Anspruch 6, wobei ein Zeitpunkt des Beginnens der Abbremsung durch die Verwendung des Koeffizienten k korrigiert wird, der aus einem Leistungswert erhalten wird, der durch Formen von zumindest einer Beschickung erhalten wird.

9. Steuerverfahren gemäß Anspruch 6, wobei:

   ein Druck, der eine Summe eines ansteigenden Drucks nach der Vorhersage und einem vorhergesagten Verzögerungsdruck ist, als ein ansteigender Einspritzdruck $\Delta P$ in der Zurückrechnung des Koeffizienten k verwendet wird;
   der ansteigende Druck nach der Vorhersage als ein Wert (Pmax-Pfb1) gegeben ist, der durch Subtrahieren eines Einspritzdrucks Pfb1 zu einem Zeitpunkt, an dem ein Wert einer Summe des ansteigenden Drucks nach der Vorhersage und dem vorhergesagten Verzögerungsdruck als nicht übereinstimmend mit einem maximalen Einspritzdruck bestimmt wird, von dem maximalen Einspritzdruck Pmax, berechnet wird, der beim Formen der einen Beschickung erhalten wird; und
   der vorhergesagte Verzögerungsdruck als ein Wert (Pfb1 + $\Delta P$-Pref) gegeben ist, der durch Addieren des ansteigenden Einspritzdrucks $\Delta P$ zu einem Zeitpunkt, an dem die Diskrepanz bestimmt wird, zu dem Einspritzdruck Pfb1 zu diesem Zeitpunkt, und Subtrahieren des Einstellungsdrucks Pref von dem addierten Wert berechnet wird.

10. Steuerverfahren gemäß Anspruch 6, wobei der Koeffizient k durch Verwenden eines Drucks erhalten wird, der detektiert wird, wenn bestimmt wird, dass dieser den zuvor eingestellten Druck P übersteigt.

**11.** Steuerverfahren gemäß Anspruch 2, wobei ein Durchschnittswert einer Vielzahl von Zurückrechnungswerten des Koeffizienten k, die durch Ausführen einer Vielzahl von Beschickungen des Testformens erhalten werden, als der Koeffizient kmodel verwendet wird.

**12.** Steuerverfahren gemäß Anspruch 2, wobei die Vielzahl der Beschickungen des Testformens ausgeführt wird, in denen sich ein Zurückrechnungswert des Koeffizienten k widerspiegelt, der durch eine vorangehende Beschickung erhalten wird.

**13.** Steuerverfahren gemäß Anspruch 2, wobei ein gleitender Durchschnittswert einer Vielzahl von Zurückberechnungswerten des Koeffizienten k, zugehörig zu einer Vielzahl von Beschickungen, die der Vielzahl von Beschickungen entspricht, als der Koeffizient kmodel selbst beim tatsächlichen Formen berechnet wird.

**14.** Steuerverfahren gemäß Anspruch 1, wobei die Vorhersage des ansteigenden Einspritzdrucks $\Delta P$ und die Bestim-mung in einem beliebigen Zeitintervall wiederholt werden.

**15.** Steuerverfahren gemäß Anspruch 1, wobei die zuvor eingestellte Abbremsung durch Verwenden eines Leistungswerts korrigiert wird, der durch Formen von zumindest einer Beschickung erhalten wird.

**16.** Steuerverfahren gemäß Anspruch 1, wobei ein Zeitpunkt des Beginns der Abbremsung durch Verwenden eines Leistungswerts korrigiert wird, der durch Formen von zumindest einer Beschickung erhalten wird.

**17.** Steuerverfahren gemäß Anspruch 1, wobei eine Differenz zwischen einem maximalen Einspritzdruck, der durch Formen von zumindest einer Beschickung detektiert wird, und dem zuvor eingestellten Druck P erhalten wird, und der zuvor eingestellte Druck P durch Verwenden der erhaltenen Differenz korrigiert wird.

**Revendications**

**1.** Procédé de commande d'une machine d'injection pour contrôler une pression d'injection par le mouvement d'une vis, comprenant les étapes suivantes :

détecter la pression d'injection générée lorsque la vis avance dans un processus d'injection ; et
prédire une montée de pression d'injection $\Delta P$ lors de la décélération de la vis avec une décélération de la vis précédemment réglée à partir d'un instant de détection de la pression d'injection ;
**caractérisé par** les étapes suivantes :

comparer entre elles la montée de pression d'injection prédite $\Delta P$ et une pression P réglée précédemment; et
décélérer la vis avec une décélération réglée précédemment sur la base du résultat de la comparaison.

**2.** Procédé de commande selon la revendication 1, dans lequel la prédiction de la montée de pression d'injection $\Delta P$ est réalisée sur la base d'une expression arithmétique représentée par $\Delta P = dP \cdot (V0/k)$, où dP est une variation de pression d'injection par unité de temps, V0 est une vitesse d'avance de la vis et k est un coefficient.

**3.** Procédé de commande selon la revendication 2, dans lequel un coefficient k, qui est une partie constante de ladite expression arithmétique, est rétro-calculé en tant que coefficient idéal kmodel en rentrant diverses sortes de valeurs de résultats de performances obtenues par au moins une passe dans l'expression arithmétique de façon à réaliser un moulage en reflétant le coefficient idéal kmodel dans un moulage suivant.

**4.** Procédé de commande selon la revendication 3, dans lequel :

une pression, qui est la somme d'une montée de pression après prédiction et d'une pression retardée prédite, est utilisée en tant que montée de pression d'injection $\Delta P$ dans le rétro-calcul du coefficient k ;
la montée de pression après prédiction est donnée par une valeur (Pmax-Pfb1), qui est calculée en soustrayant une pression d'injection Pfb1 à un instant où la valeur de la somme de la montée de pression après prédiction et de la pression retardée prédite est déterminée comme ne coïncidant pas avec une pression d'injection maximum par rapport à la pression d'injection maximum Pmax obtenue dans le moulage de ladite au moins une passe ; et
la pression retardée prédite est donnée par une valeur (Pfb1+$\Delta P$-Pref), qui est calculée en ajoutant à la pression d'injection Pfb1, à un instant où la divergence est déterminée, la montée de pression d'injection ΔP à cet instant, et en soustrayant la pression de réglage Pref de la valeur ajoutée.

5. Procédé de commande selon la revendication 2, dans lequel une valeur du coefficient k, à un instant où le moulage effectif est réalisé et où un opérateur détermine qu'un composant moulé est une pièce non défectueuse, est utilisée en tant que coefficient idéal kmodel.

6. Procédé de commande selon la revendication 2, dans lequel le coefficient k est égal à 2·dV, dV étant la décélération réglée précédemment.

7. Procédé de commande selon la revendication 6, dans lequel la décélération réglée précédemment est corrigée en utilisant le coefficient k obtenu à partir d'une valeur de performance obtenue dans le moulage d'au moins une passe.

8. Procédé de commande selon la revendication 6, dans lequel un instant de début de décélération est corrigé en utilisant le coefficient k obtenu à partir d'une valeur de performance obtenue dans le moulage de ladite au moins une passe.

9. Procédé de commande selon la revendication 6, dans lequel : une pression, qui est la somme d'une montée de pression après prédiction et d'une pression retardée prédite, est utilisée en tant que montée de pression d'injection ΔP dans le rétro-calcul du coefficient k ;
la montée de pression après prédiction est donnée par une valeur (Pmax-Pfb1), qui est calculée en soustrayant une pression d'injection Pfb1, à un instant où une valeur de la somme de la montée de pression après prédiction et de la pression retardée prédite est déterminée comme ne coïncidant pas avec une pression d'injection maximum à partir de la pression d'injection maximum Pmax obtenue dans le moulage de ladite passe ; et
la pression retardée prédite est donnée par une valeur (Pfb1+ ΔP-Pref), qui est calculée en ajoutant la montée de pression d'injection ΔP, à un instant où la divergence est déterminée, à la pression d'injection Pfb1 à cet instant, et en soustrayant la pression de réglage Pref de la valeur ajoutée.

10. Procédé de commande selon la revendication 6, dans lequel le coefficient k est obtenu en utilisant une pression détectée lorsque l'on détermine qu'elle excède la pression de réglage précédente P.

11. Procédé de commande selon la revendication 2, dans lequel une valeur moyenne d'une pluralité de valeurs de rétro-calcul du coefficient k, obtenue en réalisant une pluralité de passes de moulage de test, est utilisée en tant que coefficient kmodel.

12. Procédé de commande selon la revendication 2, dans lequel la pluralité de passes de moulage de test est réalisée tout en reflétant une valeur de rétro-calcul du coefficient k obtenue par une passe précédente.

13. Procédé de commande selon la revendication 2, dans lequel une valeur moyenne mobile d'une pluralité de valeurs de rétro-calcul du coefficient k correspondant à une pluralité de passes égale à la pluralité de passes, est calculée en tant que coefficient kmodel même dans un moulage effectif.

14. Procédé de commande selon la revendication 1, dans lequel la prédiction de la montée de pression d'injection ΔP et ladite détermination sont répétées avec un intervalle temporel arbitraire.

15. Procédé de commande selon la revendication 1, dans lequel la décélération réglée précédemment est corrigée en utilisant une valeur de performance obtenue par le moulage de ladite au moins une passe.

16. Procédé de commande selon la revendication 1, dans lequel un instant de début de décélération est corrigé en utilisant une valeur de performance obtenue par le moulage d'au moins une passe.

17. Procédé de commande selon la revendication 1, dans lequel une différence est obtenue entre une pression d'injection maximum détectée par le moulage d'au moins une passe et la pression réglée précédemment P, et la pression P réglée précédemment est corrigée en utilisant la différence obtenue.

# FIG.1

EP 1 612 027 B1

FIG.2A

SCREW VELOCITY

VELOCITY CONTROL

PRESSURE CONTROL

V1

TIME

FIG.2B

INJECTION PRESSURE

SETTING PRESSURE

P1

TIME

SCREW
VELOCITY

FIG.3A

V0

ΔS

a

TIME

INJECTION
PRESSURE

SETTING
PRESSURE  P1

Pfb

ΔP

FIG.3B

$\dfrac{dP}{dt}$

TIME

T1

# FIG.4

```
        ( START )
            │
            ▼
┌───────────────────────┐  ⌐S1
│     START FILLING     │
└───────────────────────┘
            │
            ▼
┌───────────────────────┐  ⌐S2
│  COMPUTE PREDICTED    │◄──────┐
│  RISING PRESSURE △P   │       │
└───────────────────────┘       │
            │                   │
            ▼                   │
         ╱  S3  ╲               │
      ╱  DETERMINE  ╲   NO       │
     ◄ WHETHER Pfb+△P ├─────────┘
      ╲  EXCEEDED Pt  ╱
         ╲       ╱
         YES │
            ▼               ⌐S4
┌───────────────────────┐
│  DECELERATE SCREW     │
│  AT DECELERATION dV   │
└───────────────────────┘
            │
            ▼
         (  END  )
```

FIG.5A

SCREW VELOCITY

V0

TIME

FIG.5B

INJECTION PRESSURE

SETTING PRESSURE P1

Pfb+$\Delta$P

$\Delta$P

Pfb

TIME

T1

## FIG.6A

SCREW VELOCITY

VELOCITY CONTROL — PRESSURE CONTROL

V0

## FIG.6B

PRESSURE P

3.PREDICTED MAXIMUM PRESSURE

4.PRESSURE ERROR

4.PREDICTED RISING PRESSURE: $\triangle P$

5.MAXIMUM PRESSURE: Pmax

6.SETTING PRESSURE: Pref

7.RISING PRESSURE AFTER PREDICTION

1.EXCESS PREDICTION TIME DETECTION PRESSURE Pfb1

TIME

EP 1 612 027 B1

# FIG.7

| K1 | K2 | K3 | K4 | K5 | K6 |
|----|----|----|----|----|----|

K7

# FIG.8

```
        ┌─────────────┐
        │    START    │
        └─────────────┘
               │
               ▼                    ⌐S11
        ┌──────────────────┐
        │  START SHOT OF   │
        │   FIRST TIME     │
        └──────────────────┘
               │
               ▼                    ⌐S12
        ┌──────────────────┐
        │ COMPUTE △P and k │
        └──────────────────┘
               │
               ▼                    ⌐S13
        ┌──────────────────┐
        │  START SHOT OF   │
        │   SECOND TIME    │
        └──────────────────┘
               │
               ▼                    ⌐S14
             ╱────────────╲
            ╱  DETERMINE   ╲         NO
           ⟨ WHETHER Pfb+△P ⟩──────────────────┐
            ╲ EXCEEDED P1  ╱                    │
             ╲────────────╱                     │
               │ YES                            │
               ▼                ⌐S15            ▼                ⌐S16
        ┌──────────────────┐         ┌──────────────────┐
        │ DECELERATE SCREW │         │ DECELERATE SCREW │
        │  BY DECREASING   │         │  BY INCREASING   │
        │ DECELERATION dV  │         │ DECELERATION dV  │
        └──────────────────┘         └──────────────────┘
               │                            │
               ▼◄───────────────────────────┘
        ┌─────────────┐
        │     END     │
        └─────────────┘
```

**FIG.9A**

SCREW VELOCITY

V0

TIME

**FIG.9B**

INJECTION PRESSURE

Pfb+$\Delta$P

P1

$\Delta$P

Pmax

Pfb

T1

TIME

# FIG.10

```
                    ┌─────────────┐
                    │    START    │
                    └──────┬──────┘
                           │           ⌐S21
                    ┌──────▼──────────┐
                    │  START SHOT OF  │
                    │   FIRST TIME    │
                    └──────┬──────────┘
                           │           ⌐S22
                    ┌──────▼──────────┐
                    │ COMPUTE △P and k│
                    └──────┬──────────┘
                           │           ⌐S23
                    ┌──────▼──────────┐
                    │  START SHOT OF  │
                    │   SECOND TIME   │
                    └──────┬──────────┘
                           │       ⌐S24
                         ◇─▼────────◇   NO
                       DETERMINE     ├──────────┐
                    WHETHER Pfb+△P   │          │
                       EXCEEDED P1   │          │
                         ◇──┬───────◇           │
                        YES │                   │
              ⌐S25          │              ⌐S26 ▼
        ┌───────────────────▼┐      ┌─────────────────────┐
        │     INCREASE       │      │     DECREASE        │
        │ SETTING PRESSURE   │      │  SETTING PRESSURE   │
        └─────────┬──────────┘      └──────────┬──────────┘
                  │                            │
                  ◄────────────────────────────┘
                  │
            ┌─────▼─────┐
            │    END    │
            └───────────┘
```

**FIG.11A**

INJECTION PRESSURE

P1 ········· Pfb+$\Delta P$

$\Delta P$

Pfb

TIME

T1

**FIG.11B**

INJECTION PRESSURE

Pfb+$\Delta P$

P2

$\Delta$PE

$\Delta P$

Pfb

TIME

T1

**EP 1 612 027 B1**

## REFERENCES CITED IN THE DESCRIPTION

### Patent documents cited in the description

- JP 6170909 A

- JP 8090619 A